# FASCICULE DE BREVET EUROPEEN

(11) **EP 2 857 311 B1**
(45) Date de publication et mention de la délivrance du brevet: **07.09.2016**
(21) Numéro de dépôt: 14187042.8
(22) Date de dépôt: 30.09.2014
(51) Int. Cl.: B64C 25/40, B64C 25/34, B64C 25/50, B64C 25/42

(54) **Atterrisseur d'aéronef équipé de moyens d'entraînement en rotation des roues portées par l'atterrisseur**
Fahrwerk eines Luftfahrzeugs, das mit Antriebsmitteln zum Drehen der im Fahrwerk integrierten Räder ausgestattet ist
Aircraft landing gear provided with means for rotating the wheels carried by the landing gear

(30) Priorité: 04.10.2013 FR 1359627
(43) Date de publication de la demande: 08.04.2015
(73) Titulaire: Messier-Bugatti-Dowty, 78140 Vélizy-Villacoublay (FR)
(72) Inventeur: Mazarguil, Nicolas, 78140 VELIZY-VILLACOUBLAY (FR)
(74) Mandataire: Parzy, Benjamin Alain

(56) Documents cités:
- US-A- 1 812 143
- US-A- 2 320 547
- US-A- 3 814 354
- US-A1- 2010 147 995

## Description

L'invention concerne un atterrisseur d'aéronef équipé de moyens d'entraînement en rotation des roues portées par l'atterrisseur.

### ARRIERE PLAN DE L'INVENTION

Un certain nombre de raisons poussent les constructeurs d'aéronefs à tenter de motoriser les roues des aéronefs, en utilisant notamment des actionneurs d'entraînement équipés de moteurs électriques. Un tel atterrisseur est connu de US 1,812,143, qui est considéré comme l'art antérieur le plus proche. Une telle motorisation présente en effet des avantages environnementaux et économiques importants (réduction de la consommation de carburant, réduction du bruit pendant les phases de roulage, etc.), et permet de réaliser des fonctions nouvelles : pilotage de l'aéronef au sol à distance, manoeuvre de l'aéronef lorsque les moteurs de propulsion sont éteints, roulage en marche arrière, etc.

Outre les problèmes de masse et de coût, les concepteurs et intégrateurs des actionneurs d'entraînement sont confrontés à un certain nombre de difficultés techniques, en particulier celle de la déformation sous charge de la jante de la roue, qui rend difficile son accouplement à une couronne dentée entraînée par le pignon d'un actionneur d'entraînement.

### OBJET DE L'INVENTION

L'invention a pour objet de réduire le coût et la masse des moyens d'entraînement en rotation d'une roue d'aéronef, et de rendre ces moyens d'entraînement plus tolérants à une déformation de la jante de la roue.

### RESUME DE L'INVENTION

En vue de la réalisation de ce but, on propose un atterrisseur d'aéronef comprenant un essieu et une roue qui comporte une jante montée pour tourner sur l'essieu autour d'un premier axe de rotation, des premiers obstacles s'étendant en saillie d'une face latérale de la jante, lesdits premiers obstacles étant adaptés à coopérer avec une roue dentée d'un actionneur d'entraînement porté par l'atterrisseur, la roue dentée étant montée tournante autour d'un deuxième axe de rotation perpendiculaire au premier axe de rotation.

Les premiers obstacles constituent une couronne dentée engrenée par la roue dentée de l'actionneur d'entraînement, ladite couronne dentée étant à la fois simple à réaliser, peu coûteuse et relativement légère puisque constituée uniquement des premiers obstacles et de leurs moyens de fixation à la jante. Lors de la déformation de la jante, les premiers obstacles bougent mais ne s'éloignent pas de la roue dentée de l'actionneur qui suit le déplacement des premiers obstacles. Les premiers obstacles peuvent donc toujours coopérer avec la roue dentée de l'actionneur de sorte que l'entraînement proposé est très tolérant aux déformations.

### BREVE DESCRIPTION DES DESSINS

L'invention sera mieux comprise à la lumière de la description qui suit en référence aux figures des dessins annexés parmi lesquelles :
- la figure 1 est une vue générale d'un atterrisseur de l'invention équipé de moyens d'entraînement en rotation des roues ;
- la figure 2 est une vue en perspective d'une jante d'une roue de l'atterrisseur et d'une roue dentée d'un actionneur d'entraînement associé à la roue ;
- les figures 3a et 3b représentent des premiers obstacles selon un premier mode de réalisation de l'invention, lesdits premiers obstacles étant adaptés à coopérer avec la roue dentée de l'actionneur d'entraînement ;
- la figure 4 représente des supports radiaux de la jante sur lesquels sont rapportés les premiers obstacles selon le premier mode de réalisation de l'invention ;
- la figure 5 représente des câbles de sécurité adaptés à retenir sur la jante un ou plusieurs premiers obstacles en cas de désolidarisation accidentelle de ceux-ci et de la jante ;
- les figures 6a et 6b représentent des premiers obstacles selon un deuxième mode de réalisation de l'invention ;
- la figure 7 représente des supports radiaux de la jante sur lesquels sont rapportés les premiers obstacles selon le deuxième mode de réalisation de l'invention ;
- la figure 8 est une vue de face d'un atterrisseur de l'invention équipé de moyens d'entraînement selon un premier mode de réalisation, des actionneurs d'entraînement de ces moyens d'entraînement étant dans une position d'engrènement ;
- la figure 9 est une vue de face d'un atterrisseur de l'invention équipé d'actionneurs d'entraînement selon le premier mode de réalisation dans une position de libération ;
- la figure 10 représente un atterrisseur équipé de ressorts de rappel pour rappeler un actionneur d'engrènement des moyens d'entraînement vers sa position d'équilibre ;
- la figure 11 est une vue de face d'un atterrisseur de l'invention équipé de moyens d'entraînement selon un deuxième mode de réalisation, des actionneurs d'entraînement de ces moyens d'entraînement étant dans une position d'engrènement ;
- la figure 12 est une vue de face d'un atterrisseur de l'invention équipé d'actionneurs d'entraînement selon le deuxième mode de réalisation dans une position de libération ;
- la figure 13 représente schématiquement une vue en coupe de l'actionneur d'engrènement de moyens d'entraînement en rotation selon le deuxième mode de réalisation.

### DESCRIPTION DETAILLEE DE L'INVENTION

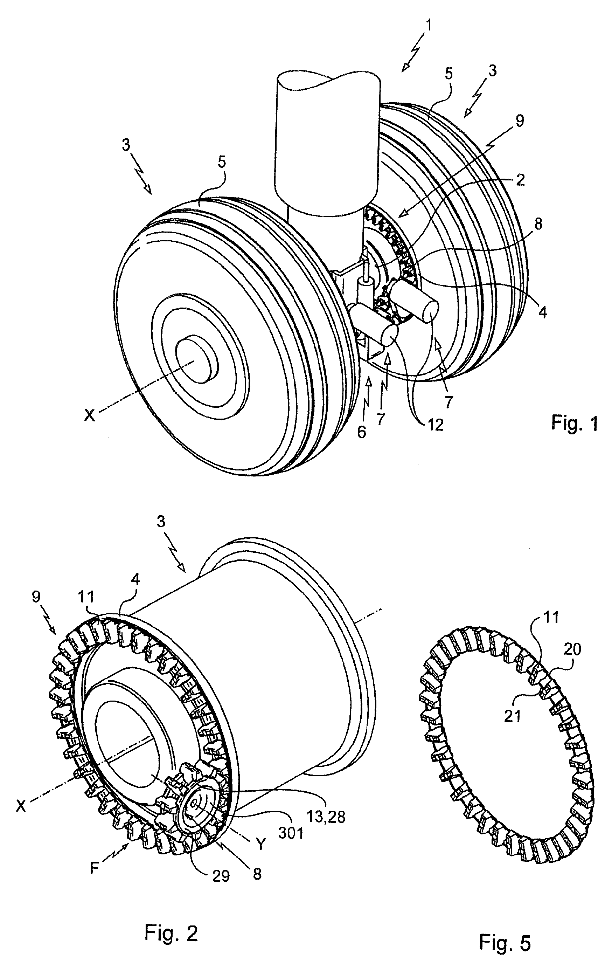

L'invention concerne un atterrisseur 1 d'aéronef, visible sur la figure 1, portant un essieu 2 en partie basse destiné à recevoir deux roues 3. Chaque roue 3 comporte une jante 4 qui porte un pneumatique 5 et qui est montée pour tourner sur l'essieu 2 au moyen de roulements non représentés autour d'un axe de l'essieu ou premier axe de rotation X.

L'atterrisseur 1 est en outre équipé de moyens d'entraînement en rotation 6 des roues 3 portées par l'atterrisseur 1, lesdits moyens d'entraînement 6 comportant un actionneur d'entraînement 7 associé à chaque roue et porté par l'atterrisseur. Cet actionneur d'entraînement 7 comporte une roue dentée 8 qui, lorsque l'actionneur d'entraînement 7 est dans une position dite « position d'engrènement », est adaptée à engrener avec une couronne dentée 9 solidaire de la roue 3 de l'aéronef.

On décrit maintenant plus en détail la roue dentée 8 et la couronne dentée 9 associées à une roue 3, en référence à la figure 1 et à la figure 2 sur laquelle seule une jante 4 de roue 3 ainsi que la roue dentée 8 de l'actionneur d'entraînement 7 associé sont représentées.

La couronne dentée 9 est formée de premiers obstacles 11 qui s'étendent en saillie de la face latérale intérieure F de la jante 4 et qui sont rapportés sur la circonférence de cette face F. Les premiers obstacles 11 s'étendent selon des directions radiales pour former des dents, de sorte que l'axe de la couronne dentée 9 est confondu avec l'axe de rotation de la roue 3 de l'aéronef ou premier axe de rotation X. La roue dentée 8 est quant à elle entraînée en rotation par un moteur d'entraînement 12 de l'actionneur d'entraînement 7 associé à un réducteur, et est montée tournante autour d'un deuxième axe de rotation Y perpendiculaire au premier axe de rotation X.

Les premiers obstacles 11 sont donc adaptés à coopérer avec des dents 13 de la roue dentée 8 de l'actionneur d'entraînement 7.

Les premiers obstacles 11 et les dents 13 de la roue dentée 8 ont une forme adaptée à l'engrènement perpendiculaire mis en oeuvre lorsque la roue dentée 8 de l'actionneur d'entraînement 7 est en position d'engrènement pour engrener avec la couronne dentée 9. La forme des premiers obstacles 11 et des dents 13 permet notamment de compenser des défauts d'angle et d'alignement produits par une éventuelle déformation de la jante 4 de la roue 3. Les premiers obstacles 11 sont par exemple fabriqués en acier inoxydable, et peuvent être des pièces d'usure.

Les premiers obstacles 11 sont amovibles et rapportés sur la face latérale F de la jante 4 de la roue 3 de l'aéronef. On les monte donc sur la roue 3 seulement lorsque l'atterrisseur de l'aéronef est équipé des moyens d'entraînement en rotation 6. Ainsi, la roue 3 d'aéronef ici décrite peut être utilisée à la fois lorsque l'atterrisseur 1 est équipé desdits moyens d'entraînement 6, auquel cas on équipe la roue 3 des premiers obstacles 11, et à la fois lorsque l'atterrisseur 1 est dépourvu de ces moyens d'entraînement 6, auquel cas les premiers obstacles 11 ne sont pas montés sur la roue 3.

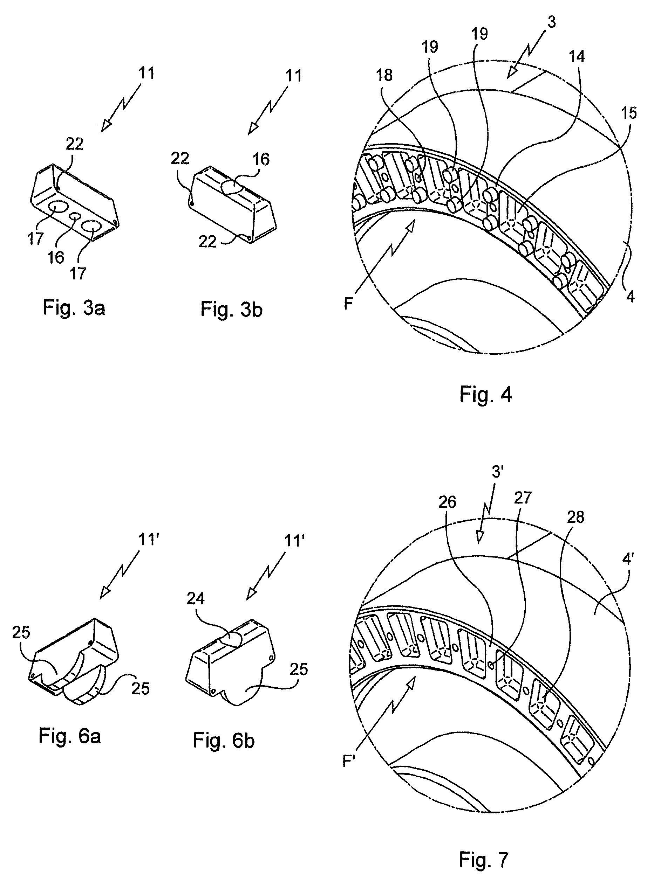

Dans un premier mode de réalisation de l'invention visible sur les figures 3a, 3b et 4, la face latérale F de la jante 4 de la roue 3 est conformée pour accueillir les premiers obstacles 11. La face latérale F présente des supports radiaux 14 séparés par des empreintes 15 et situés sur la circonférence de la face latérale F. Les premiers obstacles 11 sont rapportés sur les supports radiaux 14. Chaque premier obstacle 11 comporte un trou lamé lisse 16 traversant de part et d'autre le premier obstacle 11, ainsi que deux trous de positionnement 17. Lorsque le premier obstacle 11 est monté sur le support radial 14 correspondant, le trou lamé lisse 16 est prolongé par un trou taraudé 18 situé sur le support radial 14, et les deux trous de positionnement 17 accueillent deux pions complémentaires 19 situés eux-aussi sur le support radial 14.

Ainsi, pour fixer chaque premier obstacle 11 sur la face latérale F de la jante 4, on positionne le premier obstacle 11 sur le support radial 14 grâce aux trous de positionnement 17 et aux pions complémentaires 19, puis on fixe le premier obstacle 11 sur le support radial 14 grâce à une vis s'étendant dans le trou lamé lisse 16 et dans le trou taraudé 18.

Il est bien sûr possible de prévoir, pour un premier obstacle donné, un nombre différent de trous lamés lisses ou taraudés, de vis, de pions et de trous de positionnement.

Avantageusement, un premier et un deuxième câble de sécurité 20, 21, visibles sur la figure 5 cheminent le long de la circonférence de la face latérale F de la jante 4 en passant au travers de trous de passage 22 situés dans les premiers obstacles 11. Ces câbles de sécurité 20, 21 permettent de retenir sur la jante 4 un premier obstacle 11 en cas de désolidarisation accidentelle d'un ou de plusieurs premiers obstacles 11 et de la jante 4, par exemple en cas de rupture accidentelle d'une vis de fixation, etc.

On a représenté sur les figures 6a, 6b, et 7 un deuxième mode de réalisation de l'invention en référence à une roue 3' comportant une jante 4' ayant une face latérale F'. Chaque premier obstacle 11' comporte un trou lamé lisse 24 traversant de part et d'autre le premier obstacle 11', ainsi que deux oreilles 25 de positionnement latéral. Lorsque le premier obstacle 11' est monté sur un support radial 26 correspondant, le trou lamé lisse 24 est prolongé par un trou taraudé 27 situé sur le support radial 26, et les deux oreilles 25 s'étendent dans des empreintes 28 situées de part et d'autre du support radial 26 correspondant de la face latérale F' de la jante 4'.

Ainsi, pour fixer chaque premier obstacle 11' sur la face latérale F' de la jante 4', on positionne le premier obstacle 11' sur le support radial 26 grâce aux oreilles 25 puis on le fixe au support 26 grâce à une vis s'étendant dans le trou lamé lisse 24 et dans le trou taraudé 27.

Avantageusement, et en référence de nouveau à la figure 2, les dents 13 de la roue dentée 8 de l'actionneur d'entraînement 7 sont des deuxièmes obstacles 28 semblables aux premiers obstacles 11 ou aux premiers obstacles 11' et présentent une forme adaptée à engrener perpendiculairement la couronne dentée 9 constituée par les premiers obstacles 11 ou 11'. La roue dentée 8 comporte alors un moyeu 29, et les deuxièmes obstacles 28 sont rapportés sur la circonférence du moyeu 29.

Il est bien sûr aussi possible que la roue dentée 8 de l'actionneur d'entraînement 7 soit un pignon classique avec des dents de forme différente.

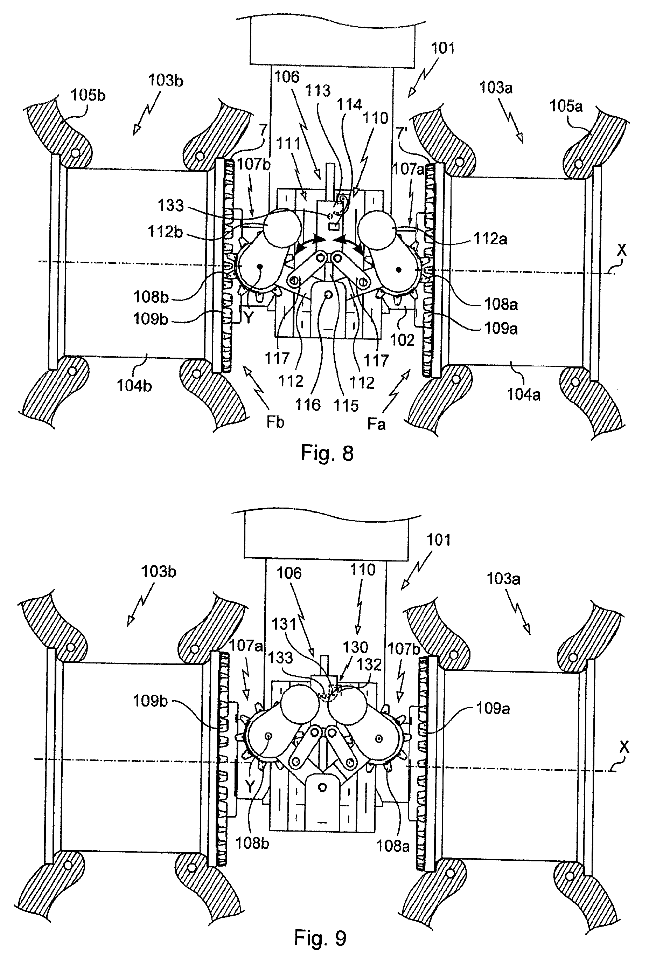

On décrit maintenant une mise en oeuvre particulièrement avantageuse de l'invention, en référence à un atterrisseur 101 d'aéronef représenté sur les figures 8 à 10. Cet atterrisseur 101 porte un essieu 102 en partie basse destiné à recevoir une première roue 103a et une deuxième roue 103b. Chaque roue comporte une jante 104a, 104b portant un pneumatique 105a, 105b et montée pour tourner sur l'essieu, au moyen de roulements non représentés, autour d'un axe de l'essieu ou premier axe de rotation X.

On définit pour chaque jante 104a, 104b de roue une face latérale intérieure Fa, Fb de la jante. Les deux faces latérales intérieures Fa, Fb de la première roue freinée 103a et de la deuxième roue 103b sont en regard l'une de l'autre.

L'atterrisseur 101 est en outre équipé de moyens d'entraînement en rotation 106 des roues 103a, 103b selon un premier mode de réalisation montés sur l'atterrisseur. Les moyens d'entraînement en rotation 106 comportent un premier actionneur d'entraînement 107a en rotation de la première roue 103a, un deuxième actionneur d'entraînement 107b en rotation de la deuxième roue 103b, ainsi qu'un actionneur d'engrènement 110.

Le premier et le deuxième actionneurs d'entraînement 107a, 107b sont destinés à entraîner en rotation les roues 103a, 103b lorsque l'aéronef est au sol, ce qui permet de déplacer l'aéronef sans utiliser les moteurs de propulsion de celui-ci.

L'entraînement en rotation des roues par les actionneurs d'entraînement est typiquement mis en oeuvre lorsque l'aéronef a une vitesse au sol inférieure à vingt noeuds et pendant une phase de taxiage.

Pour entraîner les roues de l'aéronef en rotation, le premier actionneur d'entraînement 107a comporte une première roue dentée 108a adaptée à engrener avec une première couronne dentée 109a solidaire de la première roue 103a de l'aéronef, et le deuxième actionneur d'entraînement 107b comporte une deuxième roue dentée 108b adaptée à engrener avec une deuxième couronne dentée 109b solidaire de la deuxième roue 103b de l'aéronef.

Les première et deuxième couronne dentées et les première et deuxième roue dentée sont munies de premiers et de deuxièmes obstacles tels que décrits précédemment.

Les première et deuxième roues dentées 108a, 108b sont respectivement entraînées en rotation par un premier et par un deuxième moteur électrique d'entraînement 112a, 112b, chaque moteur électrique d'entraînement étant associé à un réducteur.

L'actionneur d'engrènement 110 porte les actionneurs d'entraînement 107a, 107b, et est adapté à déplacer ceux-ci simultanément entre une position d'engrènement, visible sur la figure 8, dans laquelle la première roue dentée 108a engrène avec la première couronne dentée 109a et la deuxième roue dentée 108b engrène avec la deuxième couronne dentée 109b, et une position de libération, visible sur la figure 9, dans laquelle les première et deuxième roues dentées 108a, 108b sont éloignées des première et deuxième couronnes dentées 109a, 109b. Dans la position d'engrènement, chaque roue dentée 108a, 108b prend appui sur la jante en regard 104a, 104b, ce qui permet de donner à l'autre roue dentée une pression nécessaire pour elle aussi prendre appui sur la jante en regard.

Ainsi, l'actionneur d'engrènement 110 peut être commandé pour amener les actionneurs d'entraînement 107a, 107b en position d'engrènement lorsque leur utilisation est requise pour entraîner les roues 108a, 108b et donc pour déplacer l'aéronef, et pour amener les actionneurs d'entraînement 107a, 107b en position de libération lorsque leur utilisation n'est pas requise, c'est-à-dire lorsque l'aéronef n'est pas au sol, ou lorsqu'il est en phase de freinage, ou lorsque l'aéronef est déplacé au sol grâce à d'autres moyens de déplacement, par exemple grâce aux moteurs de propulsion de l'aéronef.

L'actionneur d'engrènement 110 est ici un actionneur électromécanique comportant un organe d'actionnement 111 et deux bras articulés 112 portant chacun l'un des actionneurs d'entraînement 107a, 107b.

L'organe d'actionnement 111 comporte une première partie mobile, en l'occurrence un corps cylindrique coulissant 113 à l'intérieur duquel est intégré un moteur électrique d'engrènement 114, représenté schématiquement sur les figures 8 et 9, et une tige verticale 115 le long de laquelle coulisse le corps cylindrique 113 sous l'action du moteur d'engrènement 114. Chacun des bras 112 est articulé sur des pivots fixes 116 de l'atterrisseur 101. Chacun des bras 112 est en outre attelé au moyen de biellettes 117 respectives au corps cylindrique coulissant 113 de l'organe d'actionnement 111. Ainsi, un déplacement du corps cylindrique coulissant 113 sous l'action du moteur d'engrènement 114 provoque une rotation simultanée des deux bras 112 qui entraîne un déplacement des premier et deuxième actionneurs d'entraînement 107a, 107b vers la position d'engrènement lorsque le moteur d'engrènement 114 tourne dans un certain sens, et vers la position de libération lorsque le moteur d'engrènement 114 tourne dans l'autre sens. Les actionneurs d'entraînement 107a, 107b effectuent donc un mouvement rotatif pour aller vers la position d'entraînement ou vers la position de libération.

Un actionneur de verrouillage 130 comportant un corps d'actionneur 131 et un crochet de verrouillage 132 est monté sur l'atterrisseur 101. L'actionneur de verrouillage 130 peut être commandé pour amener le crochet 132 dans une position de verrouillage, dans laquelle le crochet 132 coopère avec un plot de verrouillage 133 rapportée sur le corps coulissant 113 pour maintenir en position le corps coulissant 113 de manière à bloquer les actionneurs d'entraînement dans la position de libération. Le verrouillage réalisé est ainsi effectif même lorsqu'une alimentation électrique de l'actionneur d'engrènement 110 ou de l'actionneur de verrouillage 130 lui-même n'est pas disponible.

Avantageusement, on prévoit d'autoriser un débattement angulaire du corps cylindrique coulissant 113 de l'actionneur d'engrènement 110, de manière à compenser un débattement latéral ou une déformation des jantes 104a, 104b parallèlement à l'axe X de l'essieu 102. Un tel débattement latéral ou une telle déformation sont particulièrement susceptibles de se produire au cours du taxiage de l'aéronef. Lorsque les actionneurs d'entraînement 107a, 107b sont en position d'engrènement, le débattement latéral ou la déformation de la jante produisent alors un certain déplacement latéral de la roue dentée de l'actionneur d'entraînement correspondant qu'il est nécessaire de compenser.

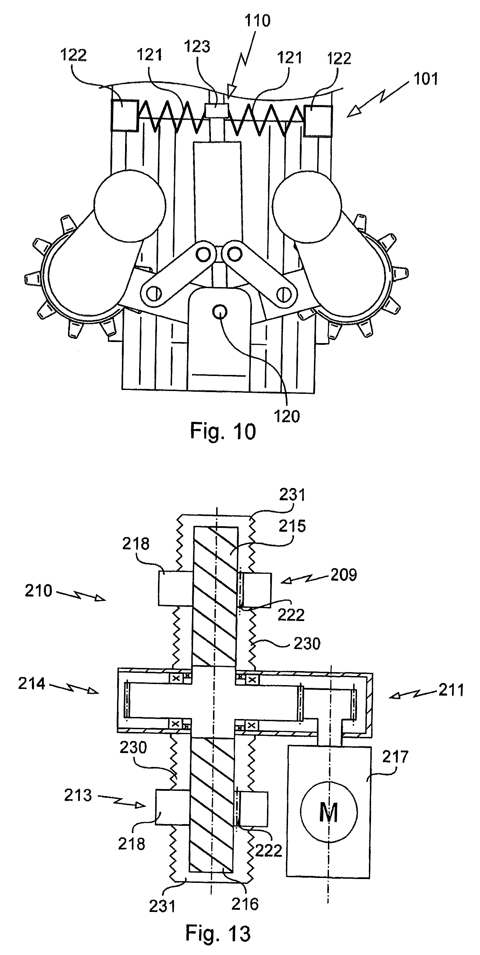

Pour cela, et en référence à la figure 10, l'actionneur d'engrènement 110 est monté sur l'atterrisseur via une liaison pivot 120 autorisant un débattement angulaire de l'actionneur d'engrènement 110. Deux ressorts de rappel 121 sont chacun fixés à une extrémité sur un premier support de l'actionneur d'engrènement 110 solidaire de la tige 115 et à une autre extrémité sur un support 122 de l'atterrisseur 101. Les ressorts de rappel 121 sont destinés à rappeler l'actionneur d'engrènement 110 vers une position d'équilibre lorsque les jantes retrouvent leur position ou leur forme normale, cette position d'équilibre étant une position dans laquelle le débattement latéral de l'actionneur d'engrènement 110 est sensiblement nul.

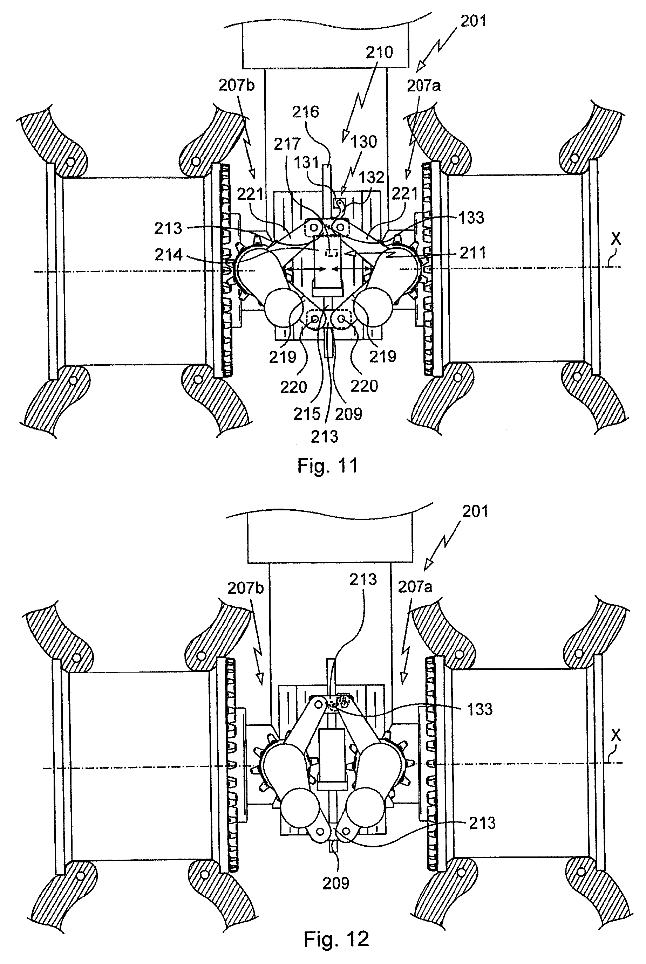

Dans un deuxième mode de réalisation des moyens d'entraînement en rotation, visible sur les figures 11 à 13, l'actionneur d'engrènement 210 est un actionneur électromécanique comportant un organe d'actionnement 211 et deux bras articulés 219 portant chacun l'un des actionneurs d'entraînement 207a, 207b. L'organe d'actionnement 211 comporte une première partie mobile 209, une deuxième partie mobile 213, un corps cylindrique fixe 214 et une première et une deuxième vis coaxiales 215, 216 ayant des sens de filetage opposés. Un moteur électrique d'engrènement 217 s'étend à l'arrière du corps cylindrique fixe 214. Les première et deuxième parties mobiles 209, 213 comportent chacune un écrou 218 coopérant par liaison hélicoïdale respectivement avec la première vis 215 et la deuxième vis 216, de sorte qu'une rotation simultanée des vis 215, 216 au moyen du moteur d'engrènement 217 provoque un déplacement axial simultané des parties mobiles 209, 213 en rapprochement ou en éloignement. Les liaisons hélicoïdales sont ici de type vis à billes. Dans ce deuxième mode de réalisation, les deux bras articulés 219 sont articulés sur des pivots 220 montés sur la deuxième partie mobile 213 de l'actionneur. Chacun des bras 219 est en outre attelé au moyen de biellettes 221 respectives à la première partie mobile 209 de l'organe d'actionnement 211.

Un actionneur de verrouillage 130 semblable à celui décrit plus tôt est monté sur l'atterrisseur 201. Le crochet 132 de l'actionneur de verrouillage 130 est ici adapté à coopérer avec un plot de verrouillage rapporté sur une partie mobile 213, de manière à bloquer les actionneurs d'entraînement dans la position de libération.

Ainsi, une rotation simultanée des vis 215, 216 au moyen du moteur d'engrènement 217 provoque le déplacement axial simultané des parties mobiles 209, 213 en rapprochement ou en éloignement. Lorsque le moteur d'engrènement tourne dans un certain sens, les parties mobiles 209, 213 se rapprochent l'une de l'autre ce qui amène les actionneurs d'entraînement 207a, 207b vers la position d'entraînement, visible sur la figure 11. Lorsque le moteur d'engrènement tourne dans l'autre sens, les parties mobiles 209, 213 s'éloignent l'une de l'autre, ce qui amène les actionneurs d'entraînement vers la position de libération, visible sur la figure 12. Les actionneurs d'entraînement 207a, 207b effectuent donc un mouvement de translation pour aller vers la position d'entraînement ou vers la position de libération.

Comme cela est visible sur la figure 13, le second mode de réalisation nécessite d'ajouter à l'actionneur d'engrènement 210 des moyens d'étanchéité permettant de protéger de toute agression extérieure les différents éléments de l'actionneur d'engrènement. Les moyens d'étanchéité comportent des soufflets qui s'étendent entre le corps cylindrique fixe 214 et l'extrémité libre de chaque vis 215, 216. Chaque vis 215, 216 est ainsi entourée par un premier soufflet 230 et par un deuxième soufflet 231. Pour chaque vis 215, 216, le premier soufflet 230 comporte un embout fixé au corps cylindrique fixe 214 et un embout fixé à l'écrou 218 correspondant, et le deuxième soufflet 231 comporte un embout fixé audit écrou 218 et un embout fixé au bout de l'extrémité libre de la vis correspondante. Un trou de circulation d'air 222 est situé sur chaque écrou 218 de manière à autoriser un passage d'air depuis l'un des premier ou deuxième soufflets 230, 231 en compression vers l'autre soufflet en extension.

L'invention n'est pas limitée au mode de réalisation particulier qui vient d'être décrit, mais, bien au contraire, englobe toute variante entrant dans le cadre de l'invention tel que défini par les revendications.

Bien que l'on ait indiqué dans la description que les premiers obstacles sont rapportés sur la face latérale de la jante d'une roue, il est possible de monter une couronne de montage intermédiaire sur la face latérale de la jante, et de rapporter les premiers obstacles sur ladite couronne de montage intermédiaire. L'utilisation d'une telle couronne de montage intermédiaire permet notamment de réduire le nombre de supports de fixation sur la jante, et de diminuer l'impact d'une déformation de la jante sur les premiers obstacles.

Bien que l'on ait indiqué que l'actionneur d'engrènement est monté sur l'atterrisseur, celui-ci peut bien sûr être monté sur un support lui-même fixé sur l'atterrisseur.

## Revendications

1. Atterrisseur d'aéronef comprenant un essieu (2) et une roue (3, 3') qui comporte une jante (4, 4') montée pour tourner sur l'essieu autour d'un premier axe de rotation (X), des premiers obstacles (11, 11') s'étendant en saillie d'une face latérale (F, F') de la jante et sont rapportés sur la face latérale (F, F'), lesdits premiers obstacles étant adaptés à coopérer avec une roue dentée (8) d'un actionneur d'entraînement (7) porté par l'atterrisseur, la roue dentée étant montée tournante autour d'un deuxième axe de rotation (Y) perpendiculaire au premier axe de rotation.

2. Atterrisseur d'aéronef selon la revendication 1, dans lequel les premiers obstacles (11, 11') sont amovibles.

3. Atterrisseur d'aéronef selon la revendication 2, dans lequel la face latérale est conformée de façon à présenter des supports radiaux (14, 26) séparés par des empreintes (15, 28), les premiers obstacles étant rapportés sur les supports.

4. Atterrisseur d'aéronef selon la revendication 3, dans lequel au moins un premier obstacle est fixé sur un support radial grâce à au moins une vis traversant l'obstacle et vissé dans le support radial.

5. Atterrisseur d'aéronef selon la revendication 3, dans lequel au moins un premier obstacle comporte un trou de positionnement (17) complémentaire d'un pion (19) situé sur le support radial sur lequel est rapporté le premier obstacle.

6. Atterrisseur d'aéronef selon la revendication 3, dans lequel au moins un premier obstacle comporte deux oreilles de positionnement (25) destinées à s'étendre dans des empreintes (28) situées de part et d'autre du support sur lequel est rapporté le premier obstacle.

7. Atterrisseur d'aéronef selon l'une des revendications précédentes, dans lequel un câble de sécurité (20, 21) chemine le long de la circonférence de la face latérale de la jante et au travers des premiers obstacles de manière à retenir sur la jante un premier obstacle en cas de désolidarisation accidentelle du premier obstacle et de la jante.

8. Atterrisseur d'aéronef selon l'une des revendications précédentes, dans lequel la roue dentée comporte un moyeu (29) et des deuxièmes obstacles (28) amovibles rapportés sur la circonférence du moyeu.

9. Atterrisseur d'aéronef selon l'une des revendications précédentes comprenant un essieu et des première et deuxième roues (103a, 103b ; 203a, 203b) comportant chacune une jante (104a, 104b) montée pour tourner sur l'essieu, l'atterrisseur comportant en outre :
- un premier actionneur d'entraînement (107a ; 207a) en rotation de la première roue comportant une première roue dentée (108a) adaptée à engrener avec les premiers obstacles de la jante de la première roue, et un deuxième actionneur d'entraînement (107b ; 207b) en rotation de la deuxième roue comportant une deuxième roue dentée (108b) adaptée à engrener avec les premiers obstacles de la jante de la deuxième roue ;
- un actionneur d'engrènement (110 ; 210) portant les actionneurs d'entraînement (107a, 107b ; 207a, 207b) et adapté à déplacer ceux-ci simultanément entre une position d'engrènement dans laquelle la première roue dentée engrène avec les premiers obstacles de la jante de la première roue et la deuxième roue dentée engrène avec les premiers obstacles de la jante de la deuxième roue, et une position de libération dans laquelle les première et deuxième roues dentées sont éloignées des jantes des première et deuxième roues.

10. Atterrisseur selon la revendication 9, dans lequel l'actionneur d'engrènement (110 ; 210) comporte un organe d'actionnement (111) et deux bras articulés (112 ; 219) portant chacun l'un des actionneurs d'entraînement, chacun des bras étant attelé au moyen de biellettes (117 ; 221) respectives à une première partie mobile (113 ; 209) de l'organe d'actionnement, de sorte qu'un déplacement de la partie mobile provoque une rotation simultanée des deux bras qui entraîne un déplacement des premier et deuxième actionneurs d'entraînement entre la position d'engrènement et la position de libération.

11. Atterrisseur selon la revendication 10, dans lequel les bras sont articulés sur des pivots fixes (116) de l'atterrisseur.

12. Atterrisseur selon la revendication 10, dans lequel les bras sont articulés sur des pivots montés sur une deuxième partie mobile (213) de l'organe d'actionnement, les première et deuxième parties mobiles étant déplaçables par l'organe d'actionnement le long d'un axe en rapprochement ou en éloignement.

13. Atterrisseur selon l'une des revendications 10 à 12, comportant en outre un actionneur de verrouillage adapté à coopérer avec la première ou la deuxième partie mobile pour bloquer les actionneurs d'entraînement dans la position de libération.

14. Atterrisseur selon la revendication 12, dans lequel les première et deuxième parties mobiles comportent chacune un écrou (218) coopérant par liaison hélicoïdale respectivement avec une première vis (215) et une deuxième vis (216) coaxiales ayant des sens de filetage opposés, de sorte qu'une rotation simultanée des vis au moyen d'un moteur de l'actionneur d'engrènement provoque le déplacement axial simultané des parties mobiles en rapprochement ou en éloignement.

15. Atterrisseur selon la revendication 14, dans lequel la liaison hélicoïdale est une liaison de type vis à billes.

16. Atterrisseur selon l'une des revendications 9 à 15, dans lequel l'actionneur d'engrènement (110) est monté sur l'atterrisseur via une liaison pivot autorisant un débattement angulaire de l'actionneur d'engrènement de manière à compenser un débattement latéral ou une déformation des jantes parallèlement à un axe de l'essieu.

## Patentansprüche

1. Luftfahrzeugfahrwerk, umfassend eine Radachse (2) und ein Rad (3, 3'), das eine Felge (4, 4') umfasst, die auf der Radachse drehbar um eine erste Drehachse (X) gelagert ist, erste Sperren (11, 11'), die von einer Seitenfläche (F, F') der Felge vorstehen und an der Seitenfläche (F, F') befestigt sind, wobei die genannten ersten Sperren dazu geeignet sind, mit einem Zahnrad (8) eines Antriebsaktors (7) zusammenzuwirken, der von dem Fahrwerk getragen wird, wobei das Zahnrad drehbar um eine zweite Drehachse (Y) gelagert ist, die senkrecht zur ersten Drehachse ist.

2. Luftfahrzeugfahrwerk nach Anspruch 1, wobei die ersten Sperren (11, 11') abnehmbar sind.

3. Luftfahrzeugfahrwerk nach Anspruch 2, wobei die Seitenfläche so ausgebildet ist, dass sie radiale Träger (14, 26) aufweist, die mittels Vertiefungen (15, 28) getrennt sind, wobei die ersten Sperren an den Trägern befestigt sind.

4. Luftfahrzeugfahrwerk nach Anspruch 3, wobei mindestens eine erste Sperre an einem radialen Träger durch mindestens eine Schraube, die die Sperre durchsetzt und in den radialen Träger geschraubt ist, befestigt ist.

5. Luftfahrzeugfahrwerk nach Anspruch 3, wobei mindestens eine erste Sperre ein Positionierungsloch (17) umfasst, das komplementär zu einem Zapfen (19) ist, der sich auf dem radialen Träger befindet, an dem die erste Sperre befestigt ist.

6. Luftfahrzeugfahrwerk nach Anspruch 3, wobei mindestens eine erste Sperre zwei Positionierungsflügel (25) umfasst, die dazu bestimmt sind, sich in Vertiefungen (28) zu erstrecken, die sich zu beiden Seiten des Trägers befinden, an dem die erste Sperre befestigt ist.

7. Luftfahrzeugfahrwerk nach einem der vorhergehenden Ansprüche, wobei ein Sicherungskabel (20, 21) entlang des Umfangs der Seitenfläche der Felge und durch die ersten Sperren hindurch derart verläuft, dass es eine erste Sperre im Falle einer unbeabsichtigten Lockerung der ersten Sperre und der Felge an der Felge hält.

8. Luftfahrzeugfahrwerk nach einem der vorhergehenden Ansprüche, wobei das Zahnrad eine Nabe (29) und abnehmbare zweite Sperren (28) umfasst, die am Umfang der Nabe befestigt sind.

9. Luftfahrzeugfahrwerk nach einem der vorhergehenden Ansprüche, umfassend eine Radachse und ein erstes und ein zweites Rad (103, 103b; 203a, 203b), die jeweils eine Felge (104a, 104b) umfassen, die drehbar auf der Radachse gelagert ist, wobei das Fahrwerk ferner umfasst:
- einen ersten Antriebsaktor (107a; 207a) zum Drehantrieb des ersten Rades, umfassend ein erstes Zahnrad (108a), das dazu geeignet ist, mit den ersten Sperren der Felge des ersten Rades in Eingriff zu kommen, und einen zweiten Antriebsaktor (107b; 207b) zum Drehantrieb des zweiten Rades, umfassend ein zweites Zahnrad (108b), das dazu geeignet ist, mit den ersten Sperren der Felge des zweiten Rades in Eingriff zu kommen;
- einen Eingriffsaktor (110; 210), der die Antriebsaktoren (107a, 107b; 207a, 207b) trägt und dazu geeignet ist, diese gleichzeitig zwischen einer Eingriffsposition, in der das erste Zahnrad mit den ersten Sperren der Felge des ersten Rades in Eingriff steht und das zweite Zahnrad mit den ersten Sperren der Felge des zweites Rades in Eingriff steht, und einer Freigabeposition zu verschieben, in der das erste und das zweite Zahnrad von den Felgen des ersten Rades und des zweiten Rades entfernt sind.

10. Fahrwerk nach Anspruch 9, wobei der Eingriffsaktor (110; 210) ein Betätigungselement (111) und zwei angelenkte Arme (112; 219) umfasst, die jeweils einen der Antriebsaktoren tragen, wobei jeder der Arme mittels jeweiligen Stangen (117; 221) an einem ersten beweglichen Teil (113; 209) des Betätigungselements befestigt ist, so dass eine Verschiebung des beweglichen Teils eine gleichzeitige Drehung der beiden Arme bewirkt, welche eine Verschiebung des ersten und des zweiten Antriebsaktors zwischen der Eingriffsposition und der Freigabeposition zur Folge hat.

11. Fahrwerk nach Anspruch 10, wobei die Arme an ortsfesten Zapfen (116) des Fahrwerks angelenkt sind.

12. Fahrwerk nach Anspruch 10, wobei die Arme an Zapfen angelenkt sind, die an einem zweiten beweglichen Teil (213) des Betätigungselements angebracht sind, wobei der erste bewegliche Teil und der zweite bewegliche Teil durch das Betätigungselement entlang einer Achse aufeinander zu und voneinander weg verschiebbar sind.

13. Fahrwerk nach einem der Ansprüche 10 bis 12, ferner umfassend einen Verriegelungsaktor, der dazu geeignet ist, mit dem ersten beweglichen Teil oder dem zweiten beweglichen Teil zusammenzuwirken, um die Antriebsaktoren in der Freigabeposition zu blockieren.

14. Fahrwerk nach Anspruch 12, wobei der erste bewegliche Teil und der zweite bewegliche Teil jeweils eine Mutter (218) umfassen, die über eine jeweilige schraubenförmige Verbindung mit einer ersten Schraube (215) und einer zweiten Schraube (216) zusammenwirkt, die koaxial zueinander sind und entgegengesetzte Gewinderichtungen haben, so dass eine gleichzeitige Drehung der Schrauben mittels eines Motors des Eingriffsaktors die gleichzeitige axiale Verschiebung der beweglichen Teile aufeinander zu und voneinander weg bewirkt.

15. Fahrwerk nach Anspruch 14, wobei die schraubenförmige Verbindung eine Verbindung nach Art eines Kugelgewindetriebes ist.

16. Fahrwerk nach einem der Ansprüche 9 bis 15, wobei der Eingriffsaktor (110) an dem Fahrwerk über eine Schwenkverbindung befestigt ist, die eine Winkelverschiebung des Eingriffsaktors derart ermöglicht, dass eine seitliche Verschiebung oder eine Verformung der Felgen parallel zu einer Achse der Radachse kompensiert wird.

## Claims

1. Aircraft landing gear comprising an axle (2) and a wheel (3, 3'), which comprises a rim (4, 4') mounted so as to rotate on the axle about a first axis of rotation (X), first blocks (11, 11') protruding from a lateral face (F, F') of the rim, said first blocks being adapted to cooperate with a gearwheel (8) of a drive actuator (7) carried by the landing gear, the gearwheel being mounted rotatably about a second axis of rotation (Y) perpendicular to the first axis of rotation.

2. Aircraft landing gear according to Claim 1, wherein the first blocks (11, 11') are removable and are carried on the lateral face.

3. Aircraft landing gear according to Claim 2, wherein the lateral face is shaped so as to have radial supports (14, 26) separated by indentations (15, 28), the first blocks being carried on the supports.

4. Aircraft landing gear according to Claim 3, wherein at least one first block is fixed on a radial support by means of at least one screw passing through the block and screwed into the radial support.

5. Aircraft landing gear according to Claim 3, wherein at least one first block comprises a positioning hole (17) complementary to a pin (19) arranged on the radial support on which the first block is carried.

6. Aircraft landing gear according to Claim 3, wherein at least one first block comprises two positioning ears (25) intended to extend into indentations (28) arranged on either side of the support on which the first block is carried.

7. Aircraft landing gear according to one of the preceding claims, wherein a safety cable (20, 21) runs along the circumference of the lateral face of the rim and through first blocks so as to retain on the rim a first block in the case of accidental detachment of the first block from the rim.

8. Aircraft landing gear according to one of the preceding claims, wherein the gearwheel comprises a hub (29) and second removable blocks (28), which are carried on the circumference of the hub.

9. Aircraft landing gear according to one of the preceding claims, comprising an axle and first and second wheels (103a, 103b; 203a, 203b) each comprising a rim (104a, 104b) mounted so as to rotate on the axle, the landing gear further comprising:
- a first actuator (107a; 207a) for driving in rotation the first wheel comprising a first gearwheel (108a) adapted to engage with the first blocks of the rim of the first wheel, and a second actuator (107b; 207b) for driving in rotation the second wheel comprising a second gearwheel (108b) adapted to engage with the first blocks of the rim of the second wheel;
- an engagement actuator (110; 210) carrying the drive actuators (107a, 107b; 207a, 207b) and adapted to displace said actuators simultaneously between an engagement position in which the first gearwheel engages with the first blocks of the rim of the first wheel and the second gearwheel engages with the first blocks of the rim of the second wheel, and a release position in which the first and second gearwheels are distanced from the rims of the first and second wheels.

10. Landing gear according to Claim 9, wherein the engagement actuator (110; 210) comprises an actuation element (111) and two hinged arms (112; 219) each carrying one of the drive actuators, each of the arms being coupled by means of respective links (117; 221) to a first movable part (113; 209) of the actuation element, such that a displacement of the movable part causes a simultaneous rotation of the two arms, which drives a displacement of the first and second drive actuators between the engagement position and the release position.

11. Landing gear according to Claim 10, wherein the arms are hinged at fixed pivots (116) of the landing gear.

12. Landing gear according to Claim 10, wherein the arms are hinged at pivots mounted on a second movable part (213) of the actuation element, the first and second movable parts being displaceable by the actuation element along an axis toward one another or away from one another.

13. Landing gear according to one of Claims 10 to 12, further comprising a latching actuator adapted to cooperate with the first or the second movable part so as to block the drive actuators in the release position.

14. Landing gear according to Claim 12, in which the first and second movable parts each comprise a nut (218) cooperating by helical connection to a first screw (215) and a second screw (216) respectively, said screws being coaxial and having opposite thread directions, such that a simultaneous rotation of the screws by means of a motor of the engagement actuator causes the simultaneous axial displacement of the movable parts toward one another or away from one another.

15. Landing gear according to Claim 14, wherein the helical connection is a connection of the ball screw type.

16. Landing gear according to one of Claims 9 to 15, wherein the engagement actuator (110) is mounted on the landing gear via a pivot connection allowing an angular displacement of the engagement actuator so as to compensate for a lateral displacement or a deformation of the rims parallel to an axis of the axle.
